# EUROPEAN PATENT APPLICATION

(11) **EP 1 859 873 A1**
(43) Date of publication of application: **28.11.2007**
(21) Application number: 06010522.8
(22) Date of filing: 22.05.2006
(51) Int. Cl.: B08B 3/00, B08B 9/00, G01N 21/78, C11D 11/00

(54) **Method and apparatus for washing a glass container**

(71) Applicant: JohnsonDiversey, Inc., Sturtevant, WI 53177 (US)
(72) Inventor: Theyssen, Holger, 67251 Freinsheim (DE); Grober, Stefan, 67227 Frankenthal (DE)
(74) Representative: Hörschler, Wolfram Johannes

(57) **Abstract**

The present invention relates to a method for washing a glass container comprising the steps of washing the glass container with a liquid containing a chelating agent, and controlling the concentration of the free-available chelating agent within the liquid by a colorimetric detection.

The invention further relates to an apparatus for carrying out such a method and the use of such an apparatus.

## Description

The present invention relates to a method for washing a glass container, an apparatus, which can be employed for carrying out said method and the use of said apparatus for controlling the concentration of a free-available chelating agent in a liquid.

Glass containers or glassware, for example, bottles used in the food and beverage industries, have to be thoroughly cleaned before those items can be filled with the respective food or beverages. This can be either first filling, after production of said glass containers or it can be a refilling (recycling) of used glass containers. In both cases there are strict regulations concerning purity, which have to be fulfilled, before a glass container can be filled or refilled, respectively. It is imperative that a glass container be washed to the point of being commercially sterile.

In the first case, impurities or residues from the production of the glass containers have to be removed. In the latter case, commercially sterile bottles, for example, have to be obtained from bottles that have been previously used, which are often contaminated with dirt, mold, sugar or other residues, product labels, glue and the like. To remove such contaminants from the containers being cleaned, harsh environments such as those that employ relatively long contact times, high temperatures and caustic (e.g., NaOH) are normally used. Such environments typically are successful in cleaning used glassware so that is substantially free of contaminants and commercially sterile. At the end, the cleaning solutions are ordinarily rinsed from the containers with clean water.

However, use of such harsh wash conditions can itself cause contamination problems of a different sort. Especially during a caustic washing step, in particular at high temperatures, chemical compounds, which may contain among others also metal ions, can be exposed from the surface of the glass container to be washed causing unwanted residues such as metal traces. Said unwanted residues have to be removed from the inside of the glass container. Washing or rinsing the glass container with clean water, ordinarily carried out as a final washing step, is usually not sufficient to remove said unwanted residues.

Therefore, the washing of glass containers (both in the case of a first filling and in the case of a refilling) usually comprises the step of washing the respective glass container with a liquid containing a chelating agent to bind the exposed metal ions by a chelating complex, which can be easily removed by a subsequent washing step.

In the U.S. patent application serial No. 11/265,315, a method of cleaning recycled glass containers is disclosed. Said method comprises exposing a glass container to a caustic solution and rinsing the glass container with a rinse solution comprising a chelating agent and an acid. By the use of said (aqueous) rinse solution it effects a cleaning of the respective glass container from unwanted metal ions exposed by a prior washing step.

In addition, the effect of water hardness of the water employed in the different washing steps has to be considered. The harder the water, the higher is the amount of chelating agent to be added in the respective rinse step, since that chelating agent also forms complexes with the metal ions (calcium and magnesium) causing water hardness. To ensure, that also the unwanted residues caused by, for example, caustic washing of the glassware are effectively removed, the amount of free-available chelating agent be employed in said washing step has to be controlled. Said washing step is only effective, if the amount of free-available chelating agent is always at a certain minimum level. Otherwise, the unwanted chemical compounds exposed from the surface of the glassware cannot be effectively removed. This is in particular the case, if hard water is employed in the respective washing step.

At present, the amount of free-available chelating agent such as EDTA contained in the washing liquid is commonly controlled by employing an automatic titration analyzer carrying out a potentiometric titration with a Ca-selective electrode on a sample of the washing liquid containing EDTA. Such a potentiometric titration has disadvantages, since it is slow and expensive, because it includes the exact determination of the concentration of the chelating agent.

Further, the monitoring of water hardness during such a filling or refilling the step of glass containers is commonly carried out by employing colorimetric or potentiometric titration. The amount of, for example, calcium carbonate present in the washing solution is determined by carrying out, for example, a colorimetric titration of the respective sample with EDTA. It has to be indicated that the monitoring of water hardness and the determination of the amount of free-available chelating agent within the wash solution are two different tasks, which have to be handled separately.
The object of the present invention is to provide a new method for washing glass containers more efficiently and economically in respect of removing unwanted chemical compounds, which may contain metal ions, from the wash solution.

The object is achieved by a method for washing a glass container comprising the steps of:
(A) washing the glass container with a liquid containing a chelating agent; and
(B) controlling the concentration of the free-available chelating agent within the liquid by a colorimetric detection.

The advantage of the method according to the present invention is that costs can be saved due per very effective controlling of the concentration of the free-available chelating agent. It is not required any more to carry out a complete determination of the concentration of the chelating agent. A controlling of the concentration can be carried out very fast, for example, even less than two minutes, allowing a frequent repeatability of said step. Therefore, costs can also be saved by avoiding the addition of a too high concentration of free-available chelating agent, which has a positive effect on the environment due to the reduction of the chemicals employed. On the other hand, the information is immediately obtained in case the amount of free-available chelating agent is too low to guaranty an efficient removal of the unwanted chemical compounds exposed from the surface of the respective glass container. Therefore, it is evident that the fast control of the concentration of the chelating agent employed in the washing liquid, preferably within a predetermined window, is a major advantage of the process according to the present invention.

In addition, the process as such or the apparatus for carrying out said process can be employed in further applications. Such further applications include each process, wherein the concentration of a free-available chelating agent in a liquid has to be controlled. Possible applications are, for example, the employment in a process for washing containers such as PET-bottles, laundry processes or processes for lubricating and cleaning of feed and conveyance installations.

Subsequently, the method for washing a glass container according to the present invention is explained in detail.

### Step (A)

Step (A) comprises the washing of the glass container with a liquid containing a chelating agent. A glass container to be washed can be of any shape and size, which is commonly employed in the field of, for example, the food and/or beverage industry. Preferably, the glass container is a bottle, preferably a bottle for beer and/or beverages or any other alcoholic or non-alcoholic drinks.

The liquid employed in step (A) contains a chelating agent. The liquid is preferably an aqueous solution. The liquid preferably contains less than 1 wt. % of halogen containing compounds (per liter of liquid) and/or preferably less than 6 ppm of free available chlorine.

The chelating agent may be any chelating agent known by a person skilled in the art, which chelating agent is able to bind a metal, preferably a metal ion, as a bi-, tri-, tetra-, penta- or hexa coordinate ligand, in particular, by forming a metal complex. Preferred chelating agents include at least an amine or a carboxylic acid functional group. Examples of preferred chelating agents to be employed in the present invention are selected from the group consisting of EDTA (ethylenediaminetetracetic acid), EGTA (ethyleneglycol-bis-(b-aminoethyl ether)-N,N-tetraacetic acid), NTA (nitrilotriacetic acid), DTPA (diethylenetriaminepentaacetic acid), HEIDA (N-(2-hydroxyethyl)iminodiacetic acid disodium salt), IDS (iminodisuccinate sodium salt); GLDA (glutamic acid-N, N-diacetic acid tetra sodium salt), MGDA (methylglycine diacetate), glucomic acid, 2,2'-bipyridyl and mixtures thereof. IDS is commercially available as Baypure CX100 (Lanxess, Germany), MGDA is commercially available as Trilon M (BASF AG, Ludwigshafen, Germany), HEIDA (also known as ethanoldiglycinate disodium salt or EDG-Na₂) is commercially available as Dissolvine® EDG (Akzo Nobel, Netherlands), GLDA is commercially available as Dissolvine® GL-38 (Akzo Nobel, Netherlands). Salts of the corresponding free acid of the before-mentioned chelating agents may also be used as long as the chelating agent has less affinity for the salt being use compared to the metal which is to be removed from the surface of the glass container. Most preferably, the chelating agent is EDTA.

As employed herein, an effective amount of chelating agent is that amount which reduces the concentration of metal leaching from the surface of the glass container being cleaned in one embodiment, the effective amount of chelating agent within the liquid ranges from 0.01 wt. % to 1. wt. %. In other embodiments, the effective amount of chelating agent within the liquid ranges from 0.02, 0.05 or 0.1 wt. % to 0.4, 0.5, 0.6, 0.7 wt. %.

The liquid containing the chelating agent may further contain an acid, which may work synergistically with the chelating agent in the removal of metals from the glass surface. The acid may also be employed to control the pH and may itself be a chelator of metals. Thus, the acid may be a mono-, di-, or polycarboxylic acid. Exemplary carboxylic acids include acetic, oxalic, maleic, fumaric, tartaric, citric, aspartic, or glutamic acid, a mixture of any two ore more thereof or salts thereof. In some embodiments, the amount of acid used in the liquid ranges from 0.01 to 0.5 or 1 wt. % or from or 0.1 to 0.5 or 1 wt. %. The amount of acid is typically equal to or less than the amount of metal chelating agent.

The liquid may further comprise a buffer for improved control the pH of the washing step. In normal use, the washing according step (A) is intended to be repeatedly used on numerous glass containers. With each use, the liquid employed in step (A) is being diluted with small amounts of the aqueous caustic solution that can raise the pH of the liquid and lower the efficiency of metal removal. The addition ofbuffer(s) at, e.g., from 0.01 wt. % to 1 wt. % slows this rise in pH and extends the life of the liquid employed in step (A). In some embodiments, the amount of buffer runs from 0.01 wt. % to 0.1, 0.2, or 0.5 wt. %; from 0.05 wt. % to 0.2, 0.5 or 1 wt. %; or from 0.1 to 0.2, 0.5 or 1 wt%. During formulation of the liquid employed in step (A), small amounts of metal hydroxides and/or mineral acids may be used to adjust the pH of the liquid to the desired value. Buffers suitable for use in the present invention include any typically used in the art to attain a pH of at least 4 but less than 9. Exemplary agents include KEPO₃, NaPO₄, sodium oxalate, potassium oxalate, mixtures thereof, and the like.

Liquids for washing glass containers according to step (A) are commercially available either in form of a concentrate or as diluted use solution, preferably as an aqueous use solution. Divo LE (JohnsonDiversey, Racine, Wisconsin, USA) is an example for a commercially available liquid containing EDTA as chelating agent. Divo AI (JohnsonDiversey, Racine, Wisconsin, USA) is an example for a commercially available liquid containing acid for pH adjustment.

It has to be mentioned that in the present invention chemical compounds are mentioned by their chemical structure/name in the respective pure form unless indicated otherwise. Especially when they are employed in a mixture their chemical structure may be altered due to the influence of, for example, the pH-value of the respective mixture. For example, a free acid may be partially or completely transferred into a corresponding salt or a chemical reaction may take place.

### Step (B)

Step (B) comprises controlling the concentration of the free-available chelating agent within the liquid (employed in step (A)) by a colorimetric detection. In a preferred embodiment, the colorimetric detection is carried out by taking a sample from the liquid employed in step (A) and said sample is transferred to a colorimetric detection unit for carrying out step (B).

As indicated above, it is essential for obtaining an effective removal of unwanted residues caused by chemical compounds exposed from the surface of the glass container to be washed that the liquid employed in step (A) contains a sufficient amount of free-available chelating agent. In contrast to methods according to the state of the art, wherein concentration of the free-available chelating agent is exactly determined by employing a time consuming potentiometric titration with a calcium-selective electrode, step (B) of the present invention is carried out by a colorimetric detection to control the concentration. The term "colorimetric detection" comprises each colorimetric detection known by a person skilled in the art. The colorimetric detection does not necessarily have to be a colorimetric titration. Preferably, the colorimetric detection is carried out by reacting the free-available chelating agent with a precise amount of a compound to form a complex.

This means that in the method according to the present invention it is not necessary to carry out an entire colorimetric titration to determine the exact amount of the free-available chelating agent present in the liquid employed in step (A). The colorimetric detection is carried out by mixing a sample containing free-available chelating agent (from the liquid employed in step (A)) with a precise amount of compound, which reacts with the free-available chelating agent to form a complex. The reaction is monitored by the additional presence of an indicator due to a possible change in color of the indicator. In case the concentration of the free-available chelating agent is less than that of the compound, which reacts with the free-available chelating agent, then no change in color of the indicator is observed. This means the concentration of the free-available chelating agent in the liquid of step (A) is below a critical level. On the other hand, if a change in color of the indicator is detected, the concentration of the free-available chelating agent in the liquid of step (A) is above a critical level.

The adjustment or determination of the precise amount of said compound depends on that concentration of the free-available chelating agent in the liquid of step (A), which is considered to be controlled (critical level). Therefore, the precise amount of said compound equals to the concentration which is equimolar to that of the critical level of the free-available chelating agent. In other words, it is the concentration which is required for observing a change in color of the indicator employed in a corresponding colorimetric titration.

Preferably, a concentration window of the free-available chelating agent is detected. This window usually ranges from a minimum of 2,5 ppm (low critical level) to a maximum of 25 ppm (upper critical level). This window preferably ranges from 4 to 15 ppm, more preferably, 5 to 10 ppm, and in particular from 5 to 7 ppm.

The compound, which reacts with the free-available chelating agent during the colorimetric detection to form a complex can be any compound, which can be used by a person skilled in the art for an ordinary colorimetric titration of a chelating agent such as EDTA. Preferred compounds are water soluble salts of magnesium, calcium or zinc. Most preferably, the compound selected from the group consisting of MgSO₄, Mg(NO₃)₂, MgCl₂, CaSO₄, Ca(NO₃)₂, CaCl₂, Zn SO₄, Zn(NO₃)₂ and ZnCl₂.

The indicator employed in the colorimetric detection may be an indicator known to a person skilled in the art to be employed for an ordinary colorimetric titration of a chlelating agent such as EDTA. Preferred indicators are 3-hydroxy-4-[(1-hydroxy-2-naphthalenyl)azo]-7-nitro-1-naphtalenesulfonic acid monosodium salt, 2-hydroxy-1-(2-hydroxy-4-sulfonaphthalenyl-1-azo)-naphthalene-3-carboxylic acid, 2,7-bis[bis(carboxymethyl)-aminomethyl]-fluorescin, 6-(5-chloro-2-hydroxy-4-sulfophenylazo)-5-hydroxy-1-naphthalenesulfonnic acid disodium salt, ammonium purpurate hydronate or 3-hydroxy-4-(6-hydroxy-m-tolylazo)naphthalene-1-sulfonic acid. The selection of an appropriate indicator depends also on the selection of the compound employed to react with the free-available chelating agent to form a complex. In case the compound contains magnesium, than the indicator as preferably 3-hydroxy-4-[(1-hydroxy-2-naphthalenyl)azo]-7-nitro-1-naphtalenesulfonic acid monosodium salt (also known as Eriochrome Black T), 6-(5-chloro-2-hydroxy-4-sulfophenylazo)-5-hytlroxy-1-naphthalenesulfonnic acid disodium salt (also known as Mordant Blue 9), or 3-hydroxy-4-(6-hydroxy-m-tolylazo)naphthalene-1-sulfonic acid (also known as calmagite). In case the compound contains calcium, the indicator is preferably 2-hydroxy-1-(2-hydroxy-4-sulfonaphthalenyl-1-azo)-naphthalene-3-carboxylic acid (also known as calcon carboxylic acid), 2,7-bis[bis(carboxymethyl)-aminomethyl]-fluorescin (also known as calcine), or ammonium purpurate hydronate (also known as Murexide). In case the compound contains zinc, then the indicator is preferably Eriochrome Black T.

In addition, a buffer may be employed in step (B). This buffer may be mixed with the compound, which reacts with the free-available chelating agent, and/or the indicator prior to be employed in step (B) or the buffer may be mixed with said components and the free-available chelating agent during the colorimetric detection step (B). Preferably, the buffer employed in step (B) is selected from a mixture of NH₄Cl and NH₄OH, preferably at pH-value of 10.

Preferably, the change in color of the colorimetric detection is between 525 and 880 nm.

In another preferred embodiment of the present invention, the concentration of the free-available chelating agent within the liquid of step (A) is controlled by at least two independent colorimetric detection. Preferably, at least two independent colorimetric detections are carried out in parallel. This is preferably obtained by employing for each colorimetric detection step a separate colorimetric detection unit. Colorimetric detection units as such are explained below in more detail. It is possible to perform 3, 4, 5 or even more independent colorimetric detections in parallel, most preferred is to carry out step (B) by two independent colorimetric detections, in particular, the two independent colorimetric detections are run in parallel.

At least two independent colorimetric detections are preferably carried out by reacting the free-available chelating agent with two different precise amounts of a compound to form a complex to be detected colorimetrically. The precise amount of the compound employed in the colorimetric detection is determined by the concentration window of the free-available chelating agent to be controlled within step (B). Preferably, one of the independent colorimetric detection is adjusted in a way to control the lower level of the window (critical level), which is preferably 2,5 ppm, more preferably 4 ppm and most preferably 5 ppm. The second independent colorimetric detection is intended to control the upper level of the concentration window (critical level), which is preferably 25 ppm, more preferably 15 ppm, even more preferably 10 ppm and most preferably 7 ppm.

In another preferred embodiment of the present invention, an acoustic and/or visible signal is effected by the colorimetric detection in case the concentration of the free-available chelating agent within the liquid in the step (A) is below 2,5 or above 25 ppm. Furthermore, said acoustic and/or visible signal can be effected by any other of the above-indicated upper or lower levels of the concentration window.

The method according to the present invention is preferably an automatic and/or continuous method. In addition, step (A) can be carried out as a so-called "pre-final rinse step, which means that step (A) is carried out as the second last step of all washing steps carried out for washing the glass container. Preferably, the pH-value of the liquid (employed in step (A)) is between 6,5 and 8,5, more preferably between 7 and 8.

In one embodiment of the present invention, the method according to the present invention further comprises the steps of:
(C) optionally washing the glass container by a pre-wash step;
(D) washing the glass container with a caustic liquid;
(E) washing the glass container with heated water; and/or
(F) washing the glass container by a final rinse step.

Preferably, the order of the washing steps is (D), (E), (A) and (F) and step (C) is optionally carried out prior to the step (D).

In another embodiment of the present invention, the method is carried out as follows:

In case of a continuous method and the detection of a concentration of the free-available chelating agent of below 2,5 ppm (critical level=2,5 ppm), the washing of the glass container is stopped until the concentration of the free-available chelating agent is raised above 2,5 ppm (critical level) by adding additional chelating agent into step (A). Preferably the critical level is 4 ppm, more preferably 5 ppm.

Alternatively, in case of a continuous method and the detection of a concentration of the free-available chelating agent of above 25 ppm (critical level = 25 ppm), the addition of additional chelating agent into step (A) is stopped until said concentration is below 25 ppm (critical level). Preferably the critical level is 15 ppm, more preferably 10 ppm, most preferably 7 ppm.

Preferably the two above-indicated controlling steps (B) are run in parallel by two independent colorimetric detections.

Another subject of the present invention is an apparatus comprising at least one section (I) for washing glass containers and said section (I) is connected with at least two independent colorimetric detection units. Such current apparatus can be used for carrying out the method for washing a glass container according to the present invention, in particular that kind of method, wherein the concentration of the free-available chelating agent according to step (B) is controlled by at least two independent colorimetric detections.

Colorimetric detections units as such are offered by various companies. In principle, any apparatus which can also be used for colorimetric titrations, can be employed as a colorimetric detection unit. Examples of commercially available colorimetric detection units are "SP 510 Hardness Monitor" of Hach Company (Loveland, Colorado, USA), "Testomat ECO" of Gebrüder Heyl Analysentechnik GmbH & Co. KG (Hildesheim, Germany), "Process Colorimeter" of Deutsche Metrohm GmbH & Co. KG (Filderstadt, Germany) or "Stamolys CA71HA" of Endress und Hauser Messtechnik GmbH & Co. KG (Stuttgart, Germany).

In another preferred embodiment, the colorimetric detection unit comprises:
i) a linear peristaltic pump or a membrane pump;
ii) an electronic control panel;
iii) a colorimetric, optionally with a solid-state mixing system;
iv) a supply for the chemicals employed during colorimetric detection; and /or
v) a corrosion-resistant case.

The way such a colorimetric detection unit operates is illustrated in the following example employing an SP 510 Hardness Monitor of Hach Company. However, any other commercially available colorimetric detection unit operates analogously.
1. A linear peristaltic pump/valve module is the heart of the colorimetric detection unit. This module precisely controls flow of the incoming sample (preferably at line pressures of 10 to 75 psi (<0,34 bar)), meters reagents and sample, and injects them into the sample cell.
2. Following injection, a magnetic stirrer mixes the sample and reagents in the cell, causing colour development to take place.
3. Light transmittance through the sample is then measured photometrically.
4. A new sample is introduced and an analysis performed every two minutes.

The apparatus as such, which comprises at least one section (I) for washing glass containers is known by persons skilled in the art. But up-to-date, no apparatus as such, which is connected with at least two independent colorimetric detection units is known. Such an apparatus is very advantageous, since it offers the possibility to control in parallel the upper and the lower allowable concentration level (critical level) of a free-available chelating agent during a washing step of glass containers. Furthermore, the apparatus according to the present invention allows a very fast rate of repeatability.

In a preferred embodiment of the present invention, the section (I) is the second last section of all washing sections employed within the apparatus.

In addition, the apparatus according to the present invention may further comprise:
optionally a section (II) for carrying out a pre-washing step;
a section (III) for carrying out a caustic washing;
a section (IV) for carrying out thermal treatment with heated water;
a section (V) for carrying out a final rinse step; and/or
optionally a filter.

Such an apparatus containing one or more washing sections, but no colorimetric detection units is well known to the persons skilled in the art and commonly applied in the field of filling and, especially, refilling of glass containers, in particular of bottles.

Preferably, each of the aforementioned sections are in form of an individual tank.

Another subject of the present invention is the use of the above-mentioned apparatus, including its preferred embodiments, to control the concentration of a free-available chelating agent in liquid.

Preferably, the concentration of a free-available chelating agent is controlled in a process for washing containers, preferably in PET (polyethylene-terephthalate) bottles or glass bottles, in a laundry process, preferably in a process of washing textiles, in a process for cleaning in place applications in the food and beverage industry, in a process for crate washing, in a process of mechanical ware washing, in a process for water treatment, in a process for lubricating and cleaning of feed and conveyance installations and in a process for cleaning hospital equipment.

### Examples

### Principle of Determination

The experiments are performed by employing a "SP 510 Hardness Monitor" colorimetric detection unit of Hach Company connected to the pre-final rinse section of an ordinary washing apparatus for glass containers. A washing liquid (Divo LE) is added to the pre-final rinse section having a predetermined concentration of chelating agent (EDTA). Samples are transferred from the pre-final rinse section to the colorimetric detection unit. Mordant Blue 9 is employed as indicator which reacts with, for example, Mg(NO₃)₂ at a pH-value of 10 to give a red-violet complex.

The system is controlled by a visible alarm signal. If the EDTA concentration is below a critical level (in examples 1 to 4, the critical level is 5 ppm) an alarm is obtained. The inaccuracy of the method for controlling the EDTA concentration was determined for being 10 to 15%. Each individual experiment was repeated once. The ppm-value of free-available EDTA relates to the respective amount of free EDTA in mg per liter of washing liquid employed in the pre-final rinse step.
1. Validation of the required amount of magnesium nitrate by preparation of a new indicator solution sample. Addition of 0,1226 g Mg(NO₃)₂ x 6H₂O/50ml to the indicator, which equals to a critical level of 5ppm free-available EDTA.

| Free-available EDTA [ppm] | alarm |
|---|---|
| 0 (Softened water) | yes, yes |
| 6,2 | no, no |

**Result:** Modification of the indicator solution (Hach Cat. No. 27692-49) has to be done with an addition of 0,1226 g Mg(NO₃)₂ x 6H₂O/50ml, respectively 2,452 g Mg (NO₃)₂ x 6H₂O / litre indicator solution. Then concentrations below 5 ppm free-available EDTA lead to an alarm signal.
2. Sensitivity in presence of water hardness
Validation of the alarm signal by using Divo LE with tap water (Mannheim, approx. 356 ppm CaCO₃). Preparation of a Divo LE solution containing free EDTA, 1,36 g Divo LE (equals 1414 ppm of EDTA) diluted with 200 ml tap water (results in 35,4 ppm of free EDTA). The free EDTA concentration was determined by a test kit from Kittiwake Developments Limited (West Sussex, Great-Britain).

| Free-available EDTA [ppm] | alarm |
|---|---|
| 0 (Softened water) | yes, yes |
| 3,5 (10% dilution) | yes, yes |
| 5,2 (15% dilution) | no, no |
| 4,6 (13% dilution) | yes, yes |

3. Sensitivity in presence of chlorine
Validation of the alarm signal in presence of available chlorine. Addition of 40 ppm sodium hypochlorite solution containing 12% available chlorine to a softened water sample and a Divo LE solution sample containing free-available EDTA.

| Free-available EDTA [ppm] | alarm |
|---|---|
| 0 (Softened water/4,8 ppm Chlorine) | yes, yes |
| 6,4 (4,8 ppm Chlorine) | no, no |
| 6,4 (9,6 ppm Chlorine) | yes, yes |

**Result:** The system showed no negative impact in presence of available chlorine up to 4,8 ppm. But a further increase of available chlorine lead to disturbance of the colour reaction and caused an alarm signal.
4. Sensitivity in presence of low pH ranges in the pre-final rinse
Validation of the alarm signal in presence of low pH from the incoming water samples. Preparation of a Divo LE solution (containing free-available EDTA) adjusted to pH 2,3 with 1 mol/1 HCl.

| Free-available EDTA [ppm] | alarm |
|---|---|
| 0 (Softened water) | yes, yes |
| 9,4 (pH 2,3) | no, no |
| 6,2 (pH 2,6) | no, no |

**Result:** The system can handle water samples with low pH values (down to approx. 2)

## Claims

1. A method for washing a glass container comprising the steps of:
(A) washing the glass container with a liquid containing a chelating agent, and
(B) controlling the concentration of the free-available chelating agent within the liquid by a colorimetric detection.

2. A method as claimed in claim 1 wherein
i) the method is an automatic and/or continuous method;
ii) the method is carried out for refilling the glass container;
iii) the glass container is a bottle, preferably a bottle for beer or beverages,
iv) step (A) is carried out as a pre-final rinse step; and/or
v) step (B) is controlled by at least two independent colorimetric detections.

3. A method as claimed in claims 1 or 2, wherein the chelating agent is selected from the group consisting of EDTA (ethylenediaminetetracetic acid), EGTA (ethyleneglycol-bis-(b-aminoethyl ether)-N,N-tetraacetic acid), NTA (nitrilotriacetic acid), DTPA (diethylenetriaminepentaacetic acid), HEIDA (N-(2-hydroxyethyl)iminodiacetic acid disodium salt), IDS (iminodisuccinate sodium salt), GLDA (glutamic acid-N,N-diacetic acid tetra sodium salt), MGDA (methylglycine diacetate), glucomic acid, 2,2'-bipyridyl and mixtures thereof, in particular ehtylenediaminetretraacetic acid (EDTA) and/or the liquid is an aqueous solution.

4. A method as claimed in any of claims 1 to 3, wherein the concentration of the free-available chelating agent within the liquid in step (A) is between 2,5 and 25 ppm and/or the pH-value of the liquid is between 6,5 and 8,5.

5. A method as claimed in any of claims 1 to 4, wherein the colorimetric detection comprises taking a sample from the liquid employed in step (A) and said sample is transferred to a colorimetric detection unit for carrying out step (B).

6. A method as claimed in any of claims 1 to 5, wherein the change in colour of the colorimetric detection is between 525 and 880 nm and/or the colorimetric detection is carried out by reacting the free-available chelating agent with a precise amount of a compound to form a complex.

7. A method as claimed in any of claims 1 to 6, wherein the compound, which reacts with the free-available chelating agent during the colorimetric detection to form a complex is selected from the group consisting of MgSO₄, Mg(NO₃)₂, MgCl₂, CaSO₄, Ca(NO₃)₂, CaCl₂, ZnSO₄, Zn(NO₃)₂ and ZnCl₂ and/or the indicator employed in the colorimetric detection is 3-hydroxy-4-[(1-hydroxy-2-naphthalenyl)azo]-7-nitro-1-naphtalenesulfonic acid monosodium salt, 2-hydroxy-1-(2-hydroxy-4-sulfonaphtyl-1-azo)-naphthalene-3-carboxylic acid, 2,7-bis[bis(carboxymethyl)-aminomethyl]-fluorescin, 6-(5-chloro-2-hydroxy-4-sulfophenylazo)-5-hydroxy-1-naphtalenesulfonic acid disodium salt, ammonium purpurate hydrate or 3-hydroxy-4-(6-hydroxy-m-tolylazo)naphthalene-1-sulfonic acid.

8. A method as claimed in any of claims 1 to 7 wherein an acoustic and/or visible signal is effected by the colorimetric detection in case the concentration of the free-available chelating agent within the liquid in step (A) is below 2,5 or above 25 ppm.

9. A method as claimed in any of claims 1 to 8 wherein in case of a continuous method and the detection of a concentration of the free-available chelating agent of below 2,5 ppm, the washing of the glass container is stopped until the concentration of the free-available chelating agent is raised above 2,5 ppm by adding additional chelating agent into step (A).

10. A method as claimed in any of claims 1 to 8, wherein in case of a continuous method and the detection of a concentration of the free-available chelating agent of above 25 ppm, the addition of additional chelating agent into step (A) is stopped until said concentration is below 25 ppm.

11. A method as claimed in any of claims 1 to 10 further comprising the steps of:
(C) optionally washing the glass container by a pre-wash step;
(D) washing the glass container with a caustic liquid;
(E) washing the glass container with heated water; and/or
(F) washing the glass container by a final rinse step.

12. A method as claimed in claim 11, wherein the order of the washing steps is (D), (E), (A) and (F) and step (C) is optionally carried out prior to the step (D).

13. An apparatus comprising at least one section (I) for washing glass containers and said section (I) is connected with at least two independent colorimetric detection units.

14. An apparatus as claimed in claim 13, wherein the section (I) is the second last section of all washing sections employed within the apparatus.

15. An apparatus as claimed in claims 13 or 14, wherein the colorimetric detection unit comprises:
i) a linear peristaltic pump or a membrane pump;
ii) an electronic control panel;
iii) a colorimeter, optionally with a solid-state mixing system;
iv) a supply for the chemicals employed during colorimetric detection; and
v) a corrosion-resistant case.

16. An apparatus as claimed in any of claims 13 to 15 wherein the apparatus comprises further
optionally a section (II) for carrying out a pre-washing step;
a section (III) for carrying out a caustic washing;
a section (IV) for carrying out thermal treatment with heated water;
a section (V) for carrying out a final rinse step; and/or
optionally a filter.

17. An apparatus as claimed in claim 16, wherein each section is an individual tank.

18. The use of an apparatus as claimed in any of claims 13 to 17 to control the concentration of a free-available chelating agent in a liquid.

19. The use as claimed in claim 18, wherein the concentration is controlled in a process for washing containers, preferably PET bottles or glass bottles, in a laundry process, preferably washing of textiles, in a process for cleaning in place applications in the food and beverage industry, in a process for crate washing, in a process for water treatment, in a process of mechanical ware washing, in a process for lubricating and cleaning of feed and conveyance installations and in a process for cleaning hospital equipment.

20. The use as claimed in claim 18 or 19, wherein the concentration is controlled in a process after a caustic washing step.
